# EUROPÄISCHE PATENTSCHRIFT

(11) **EP 1 775 110 B1**
(45) Veröffentlichungstag und Bekanntmachung des Hinweises auf die Patenterteilung: **19.12.2012**
(21) Anmeldenummer: 05109406.8
(22) Anmeldetag: 11.10.2005
(51) Int. Cl.: B29C 70/78, B29C 45/14, B29C 43/18, B29C 70/08, B60R 13/00

(54) **Kunststoffformteil mit einer von einem Kunststoffmaterial teilweise durchdrungenen Vliesschicht und mit textiler Oberfläche sowie Verfahren zu seiner Herstellung**
Plastic molded part with a non-woven layer partially impregnated by a plastic material and with a textile surface and method of producing the same
Objet en plastique moulé avec une couche de non-tissé partiellement imprégné de matière plastique et avec une surface textile ainsi que son procédé de fabrication

(43) Veröffentlichungstag der Anmeldung: 18.04.2007
(73) Patentinhaber: Boshoku Automotive Europe GmbH, 82538 Geretsried (DE)
(72) Erfinder: Schöntauf, Georg, 51597, Morsbach-Lichtenberg (DE)
(74) Vertreter: von Kreisler Selting Werner

(56) Entgegenhaltungen:
- DE-A1- 19 833 336
- GB-A- 2 323 322
- US-A- 4 532 099
- US-A1- 2003 148 096
- US-A1- 2004 067 705
- US-A1- 2005 062 197

## Beschreibung

Die Erfindung betrifft ein Kunststoffformteil mit einer von einem Kunststoffmaterial teilweise durchdrungenen Vliesschicht und mit textiler Oberfläche.

Des weiteren betrifft die vorliegende Erfindung ein Verfahren zur Herstellung des erfindungsgemäßen Kunststoffformteiles.

Kunststoffformteile, die auf mindestens einer Seite mit einem textilen Gewebe überzogen sind, finden eine breite Anwendung als Innenraumdekorverkleidungen in Automobilen. So werden sie als Verkleidungen für A-, B-, C- und D-Säulen in Automobilen verwendet. Sie müssen hierbei den unterschiedlichsten Anforderungen gerecht werden.

Kunststoffformteile, welche auf mindestens einer Seite mit einem textilen Gewebe bezogen sind, können auf unterschiedlichste Art und Weise hergestellt werden. Ein Verfahren zu ihrer Herstellung ist das Kaschierverfahren. Hierbei wird auf einem vorgefertigten Kunststoffformteil auf mindestens einer Seite ein Textil auflaminiert. Während der Laminierung wirken sowohl Druck als auch Temperatur auf das textile Gewebe des Kunststoffformteils ein.

Ein weiteres Verfahren ist das Pressverfahren, bei dem zunächst das textile Gewebe als Textilzuschnitt in einer Form, welche der Negativform des herzustellenden Kunststoffformteiles entspricht, eingebracht wird. Nachfolgend wird der geschmolzene Kunststoff in die gegenseitige Formhälfte eingebracht. Unter Hinzuziehung eines Stempels wird das Kunststoffformteil unter Anwendung von möglichst geringem Druck und möglichst geringer Temperatur in die endgültige Form gepresst. Der eingebrachte Kunststoff befindet sich, wenn er in die Form eingebracht wird, in einem fließfähigem Zustand und erhärtet in der Form durch Abkühlen. Das Kunststoffiormteil wird nachfolgend in einem festen, erhärteten Zustand der Pressvorrichtung entnommen.

Bei dem sogenannten Spritzprägeverfahren wird zunächst das Textil in Form eines Zuschnitts oder auch von der Rolle in eine entsprechende Spritzgusseinheit verbracht, welche die Negativform des herzustellenden Kunststoffformteils darstellt. Die Werkzeughälften (Kern-Mulde) befinden sich hierbei noch in einem größeren Abstand als er später für das Fertigteil notwendig ist. Das Kunststoffmaterial wird nun in die geöffneten Werkzeughälften eingespritzt und zwar in der Menge, die später für das fertige Teil notwendig ist. Die Einspritzeinheit wird verschlossen und die Werkzeughälften fahren auf ihre ursprüngliche, geplante Position so weit zusammen. Hierbei wird das Material in die noch nicht gefüllten Hohlräume hineingedrückt. Spezielle Außengeometrien der Berandungsbereiche des Kunststoffformteils stellen sicher, dass kein unnötiges Material nach außen dringt. Nach Verfestigung des Kunststoffes wird das Kunststoffiormteil aus der Spritzeinheit entnommen und weiteren Bearbeitungsschritten nach Bedarf unterzogen.

Sofern bei der Herstellung der Kunststoffformteile des Standes der Technik Vliese verwendet werden, stellen diese stets das Untermaterial dar, auf das ein Dekormaterial z.B. eine Folie oder ein Textil aufgebracht ist.

So offenbart die DE 197 29 780.3 ein Kunststoffformteil mit dekorativer Oberfläche, wobei das Kaschierungsmaterial rückseitig mit einem porösen Vlies belegt ist. Dieses poröse Vlies besteht aus ungewebten Fasern von geeigneten Thermoplasten oder Glasfasern. Beim Hinterspritzen nimmt das poröse Vlies teilweise das Kunststoffmaterial auf, wodurch eine bessere Verbindung des Vliesmaterial sowie auch indirekt des Kaschierungsmaterial mit dem hinterspritzen Kunststoff ermöglicht wird.

Die DE 198 33 336 offenbart ein hinterspritztes Kunststoffformteil für Säulenverkleidungen von Kraftfahrzeugen, wobei das Kunststoffmaterial beidseitig mit Vliesen verbundstoffartig verbunden ist. Auch bei diesen Kunststoffformteilen ist ein Dekor auf einem der Vliesschichten aufgebracht.

Dokument US 2003 148 096 A1 offenbart ein Kunststoffformteil gemäß dem Oberbegriff des Anspruchs 1 und ein Verfahren gemäß dem Oberbegriff des Anspruchs 18.

Nachteilig bei diesen Kunststoffformteilen des Standes der Technik ist insbesondere bei solchen Teilen der Innenverkleidung von Kraftfahrzeugen, die hinsichtlich ihrer Oberfläche stark beansprucht werden, die geringe Verschleißfestigkeit, geringe Abriebsfestigkeit der textilen Oberfläche. Dadurch verlieren die entsprechenden Teile, wie z.B. Türinnengriffe bzw. Armlehnen an der Innenseite der Türen oder in der Mittelkonsole, ihre optisch und haptisch anfänglich guten Eigenschaften und werden unansehnlich.

Ausgehend von diesem Stand der Technik war es die Aufgabe Kunststoffformteile mit textilem Dekor mit einer verschleißfesteren, abriebsfesteren und hinsichtlich der Anschmutzung "versiegelten" Oberfläche bereitzustellen.

Die technische Aufgabe wird gelöst durch ein Kunststoffformteil gemäß dem Anspruch 1 und ein Verfahren gemäß dem Anspruch 18.

Dabei soll das technische Merkmal "textile Struktur" so definiert sein, dass die ungeordneten Fasern der Vliesschicht keine textile Strukturierung im Sinne der Erfindung darstellt. Dies bedeutet, dass ein unbehandeltes Vlies in seiner normalen Ausbildung keine Strukturierung im Sinne der Erfindung aufweist. Eine textile Strukturierung oder Struktur im Sinne der Erfindung wird durch nachfolgend genannten Verfahren und Maßnahmen erreicht: ein Beispiel hierfür ist die Vermaschung oder Vernadelung einer Oberfläche des Vlieses, so dass eine Symmetrie im Vlies entsteht. Ein Kennzeichen der Strukturierung oder Struktur des Vlieses ist erfindungsgemäß in der Symmetrie dieser Struktur zu sehen.

In einer besonderen Ausführungsform ist die Strukturierung oder Struktur der Vliesschicht des Kunststoffformteiles ausgewählt aus der Gruppe Vermaschung der Vliesfasern, Vernadelung der Vliesfasern.

Der Begriff "Kunststoffformteil" betrifft hier definitionsgemäß einen Formkörper, der nach Erkalten des Kunststoffmaterials eine dauerhafte dreidimensionale Form erhalten hat.

Mit dem erfindungsgemäßen Gegenstand werden erstmals Kunststoffformteile bereit gestellt, die eine Dekorseite in Form einer abriebfesten und widerstandsfähigeren textilen Vliesschicht aufweisen. Weiterhin ist die Dekorseite nicht von dem Kunststoffmaterial 2 durchdrungen. Das Kunststoffmaterial 2 durchdringt ausgehend von der der Dekorseite abgewandten Seite des Formteiles einen Teil der Vliesschicht 3. Überraschenderweise wurde festgestellt, dass das Anschmelzen der bei niedrigerer Temperatur schmelzender Anteile der Mehrkomponenten-Vliesfasern einerseits die Abriebfestigkeit und Verschleißfestigkeit erhöht und gleichzeitig die textile Natur der Vliesoberfläche der Dekorseite, trotz der bei der Ausformung des Kunststoffformteiles durch in Kontakt bringen des Vlieses mit heißem, flüssigem Kunststoffmaterial und trotz der dabei auftretenden hohen Temperaturen und Drücke erhalten bleibt. Daraus ergeben sich völlig neue Möglichkeiten: die erfindungsgemäßen Kunststoffformteile können nun auch für solche Teile der Innenverkleidung von Kraftfahrzeugen verwendet werden, die hinsichtlich ihrer Oberfläche stark beansprucht werden, und so mit einer optisch ansprechenden textilen Oberfläche versehen werden. Dies wird durch die höhere Verschleißfestigkeit und höhere Abriebsfestigkeit der textilen Oberfläche (der Vliesschicht) der erfindungsgemäßen Kunststoffformteile ermöglicht. Die erfindungsgemäßen Kunststoffformteile können insbesondere z.B. als Türinnengriffe bzw. Armlehnen an der Innenseite der Türen oder in der Mittelkonsole verwendet werden. Es sind natürlich auch andere Bereiche im Innenraum des Fahrzeugs als Verkleidung mit den erfindungsgemäßen Kunststoffformteilen denkbar.

In einer bevorzugten Ausführungsform ist zumindest eine Schicht der Mehrkomponentenfaser 5, die bei einer höheren Temperatur schmilzt als die mindestens eine andere bei geringerer Temperatur schmelzende Schicht, bei der Formung des Kunststoffformteiles 1 nicht angeschmolzen.

Weiterhin ist bevorzugt, dass der Anteil der Mehrkomponentenfasern 5 in der Vliesschicht im Bereich von 10 bis 50 %, besonders bevorzugt im Bereich von 10 bis 20 % liegt.

In einer weiteren bevorzugten Ausführungsform ist die textile Struktur der von dem Kunststoffmaterial 2 abgewandten Seite 4 der Vliesschicht 3 ausgewählt aus der Gruppe Vermaschung der Vliesfasern, Vernadelung der Vliesfasern.

Als Kunststoffmaterial 2 ist ein thermoplastisches Polymer ausgewählt aus der Gruppe Polyolefin, Polyethylen, Polypropylen, Polycarbonat, Polyamid, Acryl-Butadien-Styrol-Copolymer, Acryl-Butadien-Styrol-Polycarbonat-Copolymer, Polyvinylchlord, einem Polypropylen-Polyester-Gemisch, oder Gemische derselben.

In einer bevorzugten Ausführungsform beträgt das Gewicht des Vlieses mindestens 40 g/m², vorzugsweise mindestens 60 g/m² und besonders bevorzugt mindestens 80 g/m². Weiterhin ist bevorzugt, dass die Stärke der Fasern 5 des Vlieses 3 0,2 bis 10 dtex, vorzugsweise 2 bis 4 dtex, besonders bevorzugt um 3 dtx beträgt. Insbesondere mit diesen Parametern wird sichergestellt, dass das im erfindungsgemäßen Kunststoffiormteil verwendete Vlies eine gute Sperrwirkung gegenüber dem Kunststoffmaterial aufweist, so dass die Vliesschicht in Richtung der Schichtdicke nur teilweise vom Kunststoffmaterial 2 durchdrungen wird. Dies ermöglicht die Ausbildung bzw. Beibehaltung einer ästhetisch einwandfreien Dekorseite, die in Form eines strukturierten und gegebenenfalls bedruckten Vliesoberfläche ausgebildet werden kann.

In einer besonders bevorzugten Ausführungsform weisen die Fasern des Vlieses gute Bedruckeigenschaften auf, insbesondere ist hierbei bevorzugt, dass als bedruckbare Fasern Polyester oder Polyamid im Vliesmaterial verwendet werden.

Besonders bevorzugt werden die Fasern des Vlieses aus einem Material ausgewählt aus der Gruppe Polyester, Polyamid, Viskose, Acryl, wobei Polyester und Polyamid besonders bevorzugt werden.

In einer weiteren bevorzugten Ausführungsform sind die Fasern des Vlieses imprägniert und dabei vorzugsweise wasserabweisend und/oder schmutzabweisend.

Weiterhin ist bevorzugt, dass die Vliesschicht 3 zumindest einen Anteil an Fasern 5 enthält, die aus mindestens 2 Schichten 6, 7 mit unterschiedlichen Schmelzpunkten bestehen (Mehrkomponentenfasern). Vorzugsweise ist bei mindestens einem Teil der Mehrkomponentenfasern 5 zumindest ein Teil der Schicht 7 mit niedrigerem Schmelzpunkt aufgeschmolzen, wodurch eine Verbindung mit dem Kunststoffmaterial 2 im Kunststoffiormteil hergestellt wurde. In diesen Ausführungsformen wird der höhere Schmelzpunkt der einen Schicht der Vliesfasern so ausgewählt, dass dieser höher liegt als der Schmelzpunkt des verwendeten Kunststoffmaterials, und der Schmelzpunkt der anderen Schicht der Vliesfasern mit geringerem Schmelzpunkt niedriger liegt als der Schmelzpunkt des verwendeten Kunststoffmaterials.

In einer besonders bevorzugten Ausführungsform stellt eine Schicht 6 der Vliesfasern 5 einen Innenkern 6 dar, der von mindestens einer Schicht 7 mit einem niedrigeren Schmelzpunkt umgeben ist.

Weiterhin ist bevorzugt, dass der Schmelzpunkt der weiteren auf der Schicht 7 aufgelagerten Schichten 8 der Mehrkomponentenfasern 5 einen jeweils um mindestens 15 °C niedrigeren Schmelzpunkt aufweist. Bevorzugt weisen die Schmelzpunkte der Schichten 6, 7 der Mehrkomponentenfasern 5 einen Unterschied ΔT von mindestens 15 °C auf. Besonders bevorzugt liegt der Schmelzpunkt der aufgelagerten Schicht 7 mindestens 15 °C unter dem Schmelzpunkt des Kerns 6 der Vliesfasern 5.

Besonders bevorzugt besteht die Schicht mit höherem Schmelzpunkt aus einem Material ausgewählt aus der Gruppe von Polyester, Polyamid, Viskose, Glas, Acryl, Kohlefaser, Naturfaser. Weiterhin ist bevorzugt, dass die Schicht mit niedrigerem Schmelzpunkt aus einem Material besteht, ausgewählt aus der Gruppe Polyester, Polyamid, Viskose und Acryl.

Ganz besonders bevorzugt besteht die Schicht mit höherem Schmelzpunkt aus Polyester und die Schicht mit niedrigerem Schmelzpunkt aus niedrig schmelzendem Polyester oder aus Polypropylen.

In einer weiteren bevorzugten Ausführungsform besitzt eine Schicht der Mehrkomponenten-Vliesfasern 5 einen Schmelzpunkt im Bereich von 80 bis 140 °C und die andere Schicht der Vliesfasern einen Schmelzpunkt im Bereich von 95 bis 260 °C. Bevorzugt wird ein Mischvlies verwendet, wobei der Teil der Fasern 5 des Vliese, die nicht Mehrkomponentenfasern sind aus reinen Polypropylenfasern oder Polyesterfasern besteht.

Die erfindungsgemäßen Kunststoffformteile werden hergestellt durch ein Verfahren, umfassend folgende Schritte:
- Einlegen eines Vlieses 3 in ein Werkzeug, wobei das Vlies 3 zumindest einen Anteil an Fasern (Mehrkomponentenfasern) 5 enthält, die aus mindestens zwei Schichten 6, 7 mit unterschiedlichen Schmelzpunkten bestehen, und wobei mindestens eine Seite 4 des Vlieses 3 eine textile Struktur aufweist;
- In-Kontakt-bringen der Vliesschicht 3 mit einem flüssigen Kunststoffmaterial 2 und Ausformen des Kunststoffformteiles, wobei die Vliesschicht 3 in Richtung der Schichtdicke teilweise vom Kunststoffmaterial 2 durchdrungen wird, und wobei die strukturierte Seite 4 des Vlieses 3 vom Kunststoffmaterial abgewandt ist und das abschließende Dekor des Kunststoffformteiles bildet;
- wobei die Temperatur des flüssigen Kunststoffes und/oder die Temperatur des Werkzeuges so ausgewählt wird, dass während des Formens des Kunststoffformteiles 1 ein Anschmelzen der niedrig schmelzenden Schicht(en) der Mehrkomponentenfasern 5 des Vlieses 3 zumindest an der Oberfläche der textil strukturierten Seite 4 der Vliesschicht 3 erfolgt.

In einem bevorzugten Verfahren wird das erfindungsgemäße Kunststoffformteil vorzugsweise durch verschiedene Techniken ausgewählt aus der Gruppe Spitzgießen, Prägen, Hinterprägen, Hinterpressen und Spritzprägen hergestellt.

In einer bevorzugten Ausführungsform wird zumindest eine Schicht der Mehrkomponentenfaser 5, die bei einer höheren Temperatur schmilzt als die mindestens eine andere bei geringerer Temperatur schmelzende Schicht, bei der Formung des Kunststoffformteiles 1 nicht angeschmolzen.

Weiterhin ist bevorzugt, dass der Anteil der Mehrkomponentenfasern 5 in der Vliesschicht im Bereich von 10 bis 50 %, besonders bevorzugt im Bereich von 10 bis 20 % liegt.

In einer besonderen Ausführungsform wird ein Vlies 3 verwendet bei dem die textile Struktur durch eine oder mehrere der folgenden Maßnahmen bzw. Methoden erzeugt wurde: Vermaschung der Vliesfasern, Vernadelung der Vliesfasern.

In einem bevorzugten Verfahren liegt die Temperatur des Kunststoffmaterials 2 im Bereich von 230 bis 260 °C, besonders bevorzugt im Bereich von 240 bis 250 °C.

In einem bevorzugten Verfahren liegt die Temperatur der Werkzeuginnenseite, an die die Dekorseite des herzustellenden Kunststoffformteiles 1 anliegt, im Bereich von 20 bis 70 °C, besonders bevorzugt im Bereich von 40 bis 60 °C.

In einem weiteren bevorzugten Verfahren wird als Kunststoffmaterial 2 ein Material verwendet wird ausgewählt aus der Gruppe Polyolefin, Polyethylen, Polypropylen, Polycarbonat, Polyamid, Acryl-Butadien-Styrol-Copolymer, Acryl-Butadien-Styrol-Polycarbonat-Copolymer, Polyvinylchlord, einem Polypropylen-Polyester-Gemisch, oder Gemische derselben, ganz besonders bevorzugt Polypropylen.

In einem weiteren bevorzugten Verfahren wird eine Vliesschicht verwendet, wobei des Gewicht des Vlieses mindestens 40 g/m², vorzugsweise mindestens 60 g/m² und besonders bevorzugt mindestens 80 g/m² beträgt.

In einem weiteren bevorzugten Verfahren wird eine Vliesschicht verwendet, wobei die Stärke der Fasern 5 des Vlieses 0,2 bis 10 dtex, vorzugsweise 2 bis 4 dtex und besonders bevorzugt um 3 dtex beträgt.

Weiterhin wird bevorzugt ein Vliesschicht verwendet, wobei die Fasern des Vlieses gute Bedruckungseigenschaften aufweisen. Vorzugsweise wird eine Vliesschicht verwendet, wobei die Fasern des Vlieses aus einem Material bestehen, ausgewählt aus der Gruppe Polyester, Polyamid, Viskose, Acryl, wobei Polyester und Polyamid besonders bevorzugt sind. Vorzugsweise wird eine Vliesschicht verwendet, wobei die Fasern des Vlieses imprägniert sind und dabei vorzugsweise wasserabweichend und/oder schmutzabweisend sind.

Ganz besonders bevorzugt wird eine Vliesschicht verwendet, wobei die Vliesschicht 3 zumindest einen Anteil an Fasern 5 enthält, die aus mindestens zwei Schichten 6, 7 mit unterschiedlichen Schmelzpunkten bestehen (Mehrkomponentenfasern). Insbesondere wird in dem Verfahren eine Vliesschicht verwendet, wobei bei einem Teil der Mehrkomponentenfasern 5 zumindest ein Teil der Schicht 7 mit niedrigerem Schmelzpunkt aufschmilzt und eine Verbindung mit dem Kunststoffmaterial 2 eingeht.

Vorzugsweise wird eine Vliesschicht verwendet, wobei eine Schicht 6 der Mehrkomponentenfaser 5 einen inneren Kern 6 darstellt, der von mindestens einer Schicht 7 mit einem niedrigeren Schmelzpunkt umgeben ist. In dem Verfahren wird besonders bevorzugt eine Vliesschicht verwendet, wobei der Schmelzpunkt der weiteren auf der Schicht 7 aufgelagerten Schichten 8 der Mehrkomponentenfasern 5 einen jeweils um mindestens 15 °C niedrigeren Schmelzpunkt aufweist. In dem Verfahren wird vorzugsweise eine Vliesschicht verwendet, wobei die Schmelzpunkte der Schichten 6, 7 der Mehrkomponentenfasern 5 einen Unterschied AT von mindestens 15 °C aufweisen. Vorzugsweise wird eine Vliesschicht verwendet, wobei der Schmelzpunkt der aufgelagerten Schicht 7 mindestens 15 °C geringer ist, als der Schmelzpunkt des Kerns 5 der Vliesfasern 5.

In dem Verfahren wird vorzugsweise eine Vliesschicht verwendet, wobei die Schicht mit höherem Schmelzpunkt aus einem Material besteht, ausgewählt aus der Gruppe von Polyester, Polyamid, Viskose, Glas, Acryl, Kohlefaser, Naturfaser. Weiterhin wird in dem Verfahren eine Vliesschicht vorzugsweise verwendet, wobei die Schicht mit niedrigerem Schmelzpunkt aus einem Material besteht, ausgewählt aus der Gruppe von Polyester, Polyamid, Viskose und Acryl. Besonders bevorzugt wird in dem Verfahren eine Vliesschicht verwendet, wobei die Schicht mit höherem Schmelzpunkt aus Polyester besteht. Weiterhin wird vorzugsweise eine Vliesschicht verwendet, wobei die Schicht mit niedrigerem Schmelzpunkt aus Polypropylen besteht. In einem weiteren bevorzugten Verfahren wird eine Vliesschicht verwendet, wobei eine Schicht der Vliesfasern einen Schmelzpunkt im Bereich von 80 bis 140 °C besitzt und die andere Schicht der Vliesfasern einen Schmelzpunkt im Bereich von 95 bis 260 °C.

Die technische Aufgabe wird weiterhin gelöst durch die Verwendung des erfindungsgemäßen Kunststoffformteiles als Innenverkleidungsteil, insbesondere als Säulenverkleidung für Kraftfahrzeuge.

### Beschreibung der Figuren

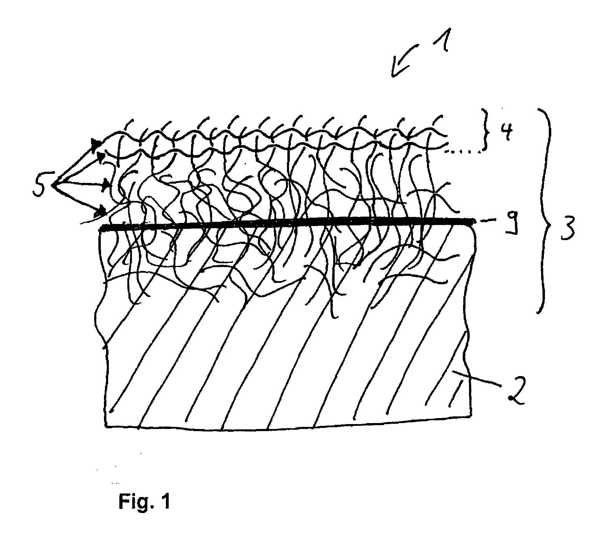

**Figur 1** zeigt eine schematische Darstellung des erfindungsgemäßen Kunststoffformteiles. Das Kunststoffformteil 1 enthält eine Vliesschicht 3 mit Vliesfasern 5, wobei ein Teil der Vliesschicht von dem Kunststoffmaterial 2 durchdrungen ist. Die Grenze der Durchdringung der Vliesschicht mit dem Kunststoffmaterial wird durch die Ziffer 9 gekennzeichnet. Da die Vliesfasern 5 zumindest teilweise nach der Durchdringung mit dem Kunststoffmaterial 2 erhalten bleiben, entsteht eine feste Verbindung in Form eines Verbundes zwischen der Vliesschicht und dem Kunststoffmaterial 2. Mit der Bezugsziffer 4 wird die textile Seite 4 der Vliesschicht 3 bezeichnet, wobei diese textile Strukturierung in Form einer Vermaschung oder Vernadelung der Vliesfasern ausgebildet sein kann. Diese textile Struktur soll schematisch durch die geordneten Fasern innerhalb des Bereiches 4 angedeutet werden. Diese textile Strukturierung der als Dekor verwendeten Oberfläche steht im Gegensatz zum restlichen Wirrvlies. Mindestens im Bereich 4 sind die bei niedriger Temperatur schmelzenden Anteile der Mehrkomponentenfasern 5 angeschmolzen (das Anschmelzen an sich und die resultierende Verbindung zwischen zwei oder mehr Fasern 5, ist in der Figur nicht gezeigt).

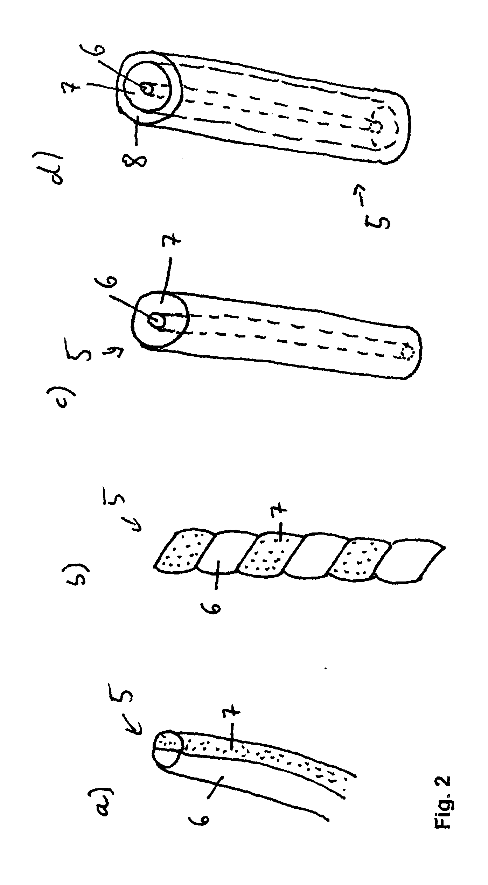

**Die** **Figur 2** zeigt unterschiedliche Ausbildungen der Vliesfasern 5 mit Schichten 6, 7 und 8, die unterschiedliche Schmelzpunkte aufweisen. Im Teilbild a) sind zwei Elemente 6 und 7 mit unterschiedlichem Schmelzpunkt benachbart. In Teilbild b) sind die Elemente mit unterschiedlichem Schmelzpunkt miteinander zu einer Helix verdreht. Im Teilbild c) ist die Ausführungsform ersichtlich, wonach der Kern mit einem höheren Schmelzpunkt von einer Schicht 7 mit niedrigerem Schmelzpunkt umgeben ist. In Teilabbildung d) wird gezeigt, dass noch weitere Schichten 8 mit noch niedrigerem Schmelzpunkt aufgebracht sein können.

### Bezugszeichenliste

1 Kunststoffformteil
2 Kunststoffmaterial
3 Vliesschicht
4 textile Seite der Vliessicht 3 (Vermaschung, Vernadelung)
5 Fasern
6 Schicht mit höherem Schmelzpunkt
7 Schicht mit niedrigerem Schmelzpunkt
8 weitere aufgelagerte Schicht
9 Grenze des Kunststoffmaterials innerhalb der Vliesschicht

## Patentansprüche

1. Ein durch Formung mittels Spritzguss, Hinterprägen, Hinterpressen oder Spritzprägen hergestelltes Kunststoffformteil (1) umfassend eine vliesschicht (3) und ein kunststoffmaterial (2) wobei die Vliesschicht (3) zumindest einen Anteil an Mehrkomponentenfaseren (5) enthält, die aus mindestens zwei Schichten (6, 7) mit unterschiedlichen Schmelzpunkten bestehen, wobei die von dem Kunststoffmaterial (2) abgewandte Seite (4) der Vliesschicht (3) eine textile Struktur aufweist und diese textil strukturierte Seite (4) der Vliesschicht (3) das abschließende Dekor des Kunststoffformteites (1) darstellt, **dadurch gekennzeichnet, dass** während der Formung des kuntstoff formteiles (1) erfolgtes Anschmelzen nur die niedrig schmelzenden Schicht en der Mehrkomponentenfasern (5) des Vlieses zumindest an der Oberfläche der textil strukturierten Seite (4) der Vliesschicht (3) angeschmolzen sind und, daß die vliesschicht (3) durch das kunstsoffmaterial (2) in Richtung der schichtdiche teilweise durchdrungen wird.

2. Das Kunststoffformteil nach Anspruch 1, **dadurch gekennzeichnet, dass** zumindest eine Schicht der Mehrkomponentenfaser (5), die bei einer höheren Temperatur schmilzt als die mindestens eine andere bei geringerer Temperatur schmelzende Schicht, bei der Formung des Kunststoffformteiles (1) nicht angeschmolzen ist.

3. Das Kunststoffformteil nach Anspruch 1 oder 2, **dadurch gekennzeichnet, dass** der Anteil der Mehrkomponentenfasern (5) in der Vliesschicht im Bereich von 10 bis 50 %, vorzugsweise im Bereich von 10 bis 20 % liegt.

4. Das Kunststoffformteil nach einem der Ansprüche 1 bis 3, **dadurch gekennzeichnet, dass** die textile Struktur der von dem Kunststoffmaterial (2) abgewandten Seite (4) der Vliesschicht (3) ausgewählt ist aus der Gruppe Vermaschung der Vliesfasern, Vernadelung der Vliesfasern.

5. Das Kunststoffformteil nach einem der Ansprüche 1 bis 4, **dadurch gekennzeichnet, dass** das Kunststoffmaterial aus thermoplastischen Polymeren ausgewählt ist aus der Gruppe Polyolefin, Polyethylen, Polypropylen, Polycarbonat, Polyamid, Acryl-Butadien-Styrol-Copolymer, Acryl-Butadien-Styrol-Polycarbonat-Copolymer, Polyvinylchlorid, einem Polypropylen-Polyester-Gemisch, oder Gemische derselben.

6. Das Kunststoffformteil nach einem der Ansprüche 1 bis 5, **dadurch gekennzeichnet, dass** die Stärke der Mehrkomponentenfasern (5) des Vlieses 0,2 bis 10 dtex, vorzugsweise 2 bis 4 dtex, besonders bevorzugt um 3 dtex beträgt.

7. Das Kunststoffformteil nach einem der Ansprüche 1 bis 6, **dadurch gekennzeichnet, dass** die Mehrkomponentenfasern des Vlieses aus einem Material bestehen ausgewählt aus der Gruppe Polyester, Polyamid, Viskose, Acryl, wobei Polyester und Polyamid besonders bevorzugt sind.

8. Das Kunststoffformteil nach einem der Ansprüche 1 bis 7, **dadurch gekennzeichnet, dass** zumindest bei einem Teil der Mehrkomponentenfasern (5) zumindest ein Teil der Schicht (7) mit niedrigerem Schmelzpunkt aufgeschmolzen ist und eine Verbindung mit dem Kunststoff material (2) eingegangen ist.

9. Das Kunststoffformteil nach einem der Ansprüche 1 bis 8, **dadurch gekennzeichnet, dass** eine Schicht (6) der Mehrkomponentenfasern (5) einen inneren Kern (6) darstellt, der von mindestens einer Schicht (7) mit einem niedrigeren Schmelzpunkt umgeben ist.

10. Das Kunststoffformteil nach einem der Ansprüche 1 bis 9, **dadurch gekennzeichnet, dass** der Schmelzpunkt der weiteren auf der Schicht (7) aufgelagerten Schichten (8) der Mehrkomponentenfasern (5) einen jeweils um mindestens 15 °C niedrigeren Schmelzpunkt aufweist.

11. Das Kunststoffformteil nach einem der Ansprüche 1 bis 10, **dadurch gekennzeichnet, dass** die Schmelzpunkte der Schichten (6, 7) der Mehrkomponentenfasern (5) einen Unterschied AT von mindestens 15 °C aufweisen.

12. Das Kunststoffformteil nach Anspruch 11, **dadurch gekennzeichnet, dass** der Schmelzpunkt der ausgelagerten Schicht (7) mindestens 15 °C geringer ist als der Schmelzpunkt des Kerns (6).

13. Dar. Kunststoffformteil nach einem der Ansprüche 1 bis 12, **dadurch gekennzeichnet, dass** die Schicht mit höherem Schmelzpunkt aus einem Material besteht ausgewählt aus der Gruppe Polyester, Polyamid, Viskose, Glas, Acryl, Kohlefaser, Naturfaser.

14. Das Kunststoffformteil nach einem der Ansprüche 1 bis 13, **dadurch gekennzeichnet, dass** die Schicht mit niedrigerem Schmelzpunkt aus einem Material besteht ausgewählt aus der Gruppe Polyester, Polyamid, Viskose, Acryl.

15. Das Kunststoffformteil nach einem der Ansprüche 1 bis 14, **dadurch gekennzeichnet, dass** die Schicht mit höherem Schmelzpunkt aus Polyester besteht.

16. Das Kunststoffformteil nach einem der Ansprüche 1 bis 15, **dadurch gekennzeichnet, dass** die Schicht mit niedrigerem Schmelzpunkt aus Polypropylen besteht.

17. Das Kunststoffformteil nach einem der Ansprüche 1 bis 16, **dadurch gekennzeichnet, dass** eine Schicht einen Schmelzpunkt im Bereich von 80 bis 140 °C besitzt, und die andere Schicht einen Schmelzpunkt im Bereich von 95 bis 260 °C besitzt.

18. Verfahren zur Herstellung eines Kunststoffformteiles (1), umfassend die folgenden Schritte:
- Einlegen eines Vlieses (3) in ein Werkzeug, wobei das Vlies (3) zumindest einen Anteil an Mehrkomponentenfasern 5) enthält, die aus mindestens zwei Schichten (6, 7) mit unterschiedlichen Schmelzpunkten bestehen, und wobei mindestens eine Seite (4) des Vlieses (3) eine textile Struktur aufweist;
- In-Kontakt-Bringen der Vliesschicht (3) mit einem flüssigen Kunststoffmaterial (2) und Ausformen des Kunststoffformteiles, wobei die strukturierte Seite (4) des Vlieses (3) vom Kunststoffmaterial abgewandt ist und das abschließende Dekor des Kunststoffformteiles bildet; **dadurch gekennzeichnet, daß** bein Im-kontakt-Bringen der vliesschicht mit dem flüssigen kunnststoffmaterial und Ausformen des kunststoff formteiles die vliesschicht (3) in Richtung der Schichtdicke teilweise von kunststoffmaterial (2) durch drungen wird und, daß
die Temperatur des flüssigen Kunststoffes und/oder die Temperatur des Werkzeuges so ausgewählt wird, dass während des Formens des Kunststoffformteiles (1) ein Anschmelzen der niedrig schmelzenden Schicht en der Mehrkomponentenfasern (5) des Vlieses (3) zumindest an der Oberfläche der textil strukturierten Seite (4) der Vliesschicht (3) erfolgt.

19. Das Verfahren nach Anspruch 18, **dadurch gekennzeichnet, dass** das Formen des Kunststoffformteiles (1) mittels Spritzguss, Hinterprägen, Hinterpressen oder Spritzprägen erfolgt.

20. Das Verfahren nach Anspruch 18 oder 19, **dadurch gekennzeichnet, dass** die Temperatur des Kunststoffmaterials (2) im Bereich von 230 bis 260 °C, vorzugsweise von 240 bis 250 °C liegt.

21. Das Verfahren nach einem der Ansprüche 18 bis 20, **dadurch gekennzeichnet, dass** die Temperatur der Werkzeuginnenseite, an die die Dekorseite des herzustellenden Kunststoffformteiles (1) anliegt, im Bereich von 20 bis 70 °C, vorzugsweise von 40 bis 60 °C liegt.

22. Das Verfahren nach einem der Ansprüche 18 bis 21, **dadurch gekennzeichnet, dass** als Kunststoffmaterial (2) ein Material verwendet wird ausgewählt aus der Gruppe Polyolefin, Polyethylen, Polypropylen, Polycarbonat, Polyamid, Acryl-Butadien-Styrol-Copolymer, Acryl-Butadien-Styrol-Polycarbonat-Copolymer, Polyvinylchlorid, einem Polypropylen-Polyester-Gemisch, oder Gemische derselben, vorzugsweise Polypropylen.

23. Das Verfahren nach einem der Ansprüche 18 bis 22, **dadurch gekennzeichnet, dass** ein Kunststoffformteil mit den Merkmalen der Ansprüche 1 bis 17 hergestellt wird.

24. Verwendung des Kunststoffformteiles nach den Ansprüchen 1 bis 17, oder Verwendung des durch das Verfahren nach den Ansprüchen 18 bis 23 hergestellte Kunststoffformteil als Innenverkleidungsteil für Kraftfahrzeuge.

## Claims

1. A plastic molded part (1) prepared by injection molding, back injection molding, back compression molding or injection-compression molding comprising a non-woven layer (3) and a plastic material (2), wherein said non-woven layer (3) contains at least a fraction of multicomponent fibers (5) consisting of at least two layers (6, 7) with different melting points, wherein the side (4) of the non-woven layer (3) facing away from the plastic material (2) has a textile structure, and this textile-structured side (4) of the non-woven layer (3) represents the final decoration of the plastic molded part (1), **characterized in that** the fusion occurring during the forming of the plastic molded part (1) fuses only the low-melting layers of the multicomponent fibers (5) of the non-woven, at least at the surface of the textile-structured side (4) of the non-woven layer (3), and that said non-woven layer (3) is partially penetrated by said plastic material (2) in the direction of the layer thickness.

2. The plastic molded part according to claim 1, **characterized in that** at least one layer of the multicomponent fiber (5) that melts at a higher temperature than said at least one other layer melting at a lower temperature has not been fused during the forming of said plastic molded part (1).

3. The plastic molded part according to claim 1 or 2, **characterized in that** the proportion of multicomponent fibers (5) in the non-woven layer is within a range of from 10 to 50%, preferably within a range of from 10 to 20%.

4. The plastic molded part according to any of claims 1 to 3, **characterized in that** said textile structure of the side (4) of the non-woven layer (3) facing away from the plastic material (2) is selected from the group consisting of stitch-bonded non-woven fibers, needle-punched non-woven fibers.

5. The plastic molded part according to any of claims 1 to 4, **characterized in that** said plastic material is selected from thermoplastic polymers from the group consisting of polyolefin, polyethylene, polypropylene, polycarbonate, polyamide, acrylic/butadiene/styrene copolymer, acrylic/butadiene/styrene/polycarbonate copolymer, polyvinyl chloride, a polypropylene/polyester blend, or mixtures thereof.

6. The plastic molded part according to any of claims 1 to 5, **characterized in that** the linear density of the multicomponent fibers (5) of the non-woven is from 0.2 to 10 dtex, preferably from 2 to 4 dtex, more preferably around 3 dtex.

7. The plastic molded part according to any of claims 1 to 6, **characterized in that** said multicomponent fibers of the non-woven are made of a material selected from the group consisting of polyester, polyamide, viscose, acrylic, wherein polyester and polyamide are particularly preferred.

8. The plastic molded part according to any of claims 1 to 7, **characterized in that** at least part of the layer (7) having a lower melting point has been fused at least in part of said multicomponent fibers (5) and has been bonded to said plastic material (2).

9. The plastic molded part according to any of claims 1 to 8, **characterized in that** a layer (6) of said multicomponent fibers (5) represents an inner core (6), which is surrounded by at least one layer (7) having a lower melting point.

10. The plastic molded part according to any of claims 1 to 9, **characterized in that** the melting point of the further layers (8) covering layer (7) of said multicomponent fibers (5) is lower by at least 15 °C.

11. The plastic molded part according to any of claims 1 to 10, **characterized in that** the melting points of layers (6, 7) of said multicomponent fibers (5) show a difference ΔT of at least 15 °C.

12. The plastic molded part according to claim 11, **characterized in that** the melting point of the covering layer (7) is lower than the melting point of the core (6) by at least 15 °C.

13. The plastic molded part according to any of claims 1 to 12, **characterized in that** said layer having a higher melting point is made of a material selected from the group consisting of polyester, polyamide, viscose, glass, acrylic, carbon fiber, natural fiber.

14. The plastic molded part according to any of claims 1 to 13, **characterized in that** said layer having a lower melting point is made of a material selected from the group consisting of polyester, polyamide, viscose, acrylic.

15. The plastic molded part according to any of claims 1 to 14, **characterized in that** said layer having a higher melting point is made of polyester.

16. The plastic molded part according to any of claims 1 to 15, **characterized in that** said layer having a lower melting point is made of polypropylene.

17. The plastic molded part according to any of claims 1 to 16, **characterized in that** one layer has a melting point of from 80 to 140 °C, and the other layer has a melting point within a range of from 95 to 260 °C.

18. A process for preparing a plastic molded part (1), comprising the following steps:
- inserting a non-woven (3) into a mold, said non-woven (3) containing at least a proportion of multicomponent fibers (5) consisting of at least two layers (6, 7) with different melting points, wherein at least one side (4) of the non-woven (3) has a textile structure;
- contacting said non-woven layer (3) with a liquid plastic material (2) and forming said plastic molded part, wherein the structured side (4) of the non-woven (3) faces away from the plastic material and represents the final decoration of the plastic molded part;
**characterized in that** said non-woven layer (3) is partially penetrated by said plastic material (2) in the direction of the layer thickness when said non-woven layer is contacted with said liquid plastic material and said plastic molded part is formed; and that
the temperature of the liquid plastic material and/or the temperature of the mold is selected in such a way that a fusion of said low-melting layers of said multicomponent fibers (5) of the non-woven (3) occurs during the forming of the plastic molded part (1), at least at the surface of the textile-structured side (4) of the non-woven layer (3).

19. The process according to claim 18, **characterized in that** the forming of the plastic molded part (1) is effected by injection molding, back injection molding, back compression molding or injection-compression molding.

20. The process according to claim 18 or 19, **characterized in that** the temperature of said plastic material (2) is within a range of from 230 to 260 °C, preferably from 240 to 250 °C.

21. The process according to any of claims 18 to 20, **characterized in that** the temperature of the interior side of the mold contacted by the decorative side of the plastic molded part (1) to be prepared is within a range of from 20 to 70 °C, preferably from 40 to 60 °C.

22. The process according to any of claims 18 to 21, **characterized in that** a material selected from thermoplastic polymers from the group consisting of polyolefin, polyethylene, polypropylene, polycarbonate, polyamide, acrylic/butadiene/styrene copolymer, acrylic/butadiene/styrene/polycarbonate copolymer, polyvinyl chloride, a polypropylene/polyester blend, or mixtures thereof, preferably polypropylene, is used as said plastic material (2).

23. The process according to any of claims 18 to 22, **characterized in that** a plastic molded part having the features of claims 1 to 17 is prepared.

24. Use of the plastic molded part according to claims 1 to 17 or use of the plastic molded part prepared by the process according to claims 18 to 23 as an interior trim part for motor vehicles.

## Revendications

1. Pièce moulée en plastique (1) préparée par moulage par injection, surmoulage par estampage, surmoulage par compression ou surmoulage par estampage-injection, comprenant une couche non-tissée (3) et un matériau plastique (2), dans laquelle ladite couche non-tissée (3) contient au moins une certaine proportion de fibres multicomposées (5) consistant en au moins deux couches (6, 7) ayant des points de fusion différents, dans laquelle le côté (4) de la couche non-tissée (3) opposé au matériau plastique (2) a une structure textile et ce côté à structure textile (4) de ladite couche non-tissée (3) représente la décoration finale de la pièce moulée en plastique (1), **caractérisée en ce que** la fusion ayant lieu pendant le moulage de la pièce moulée en plastique (1) concerne seulement les couches à bas point de fusion desdites fibres multicomposées (5) dudit non-tissé, au moins à la surface du côté à structure textile (4) de ladite couche non-tissée (3), et **en ce que** ladite couche non-tissée (3) est partiellement pénétrée par le matériau plastique (2) dans la direction de l'épaisseur de la couche.

2. Pièce moulée en plastique selon la revendication 1, **caractérisée en ce qu'**au moins une couche de ladite fibre multicomposée (5) ayant un point de fusion supérieur à celui de ladite au moins une autre couche ayant un point de fusion inférieur n'a pas été partiellement fondue pendant le moulage de ladite pièce moulée en plastique (1).

3. Pièce moulée en plastique selon la revendication 1 ou 2, **caractérisée en ce que** la proportion des fibres multicomposées (5) dans la couche non-tissée est comprise entre 10 et 50 %, de préférence entre 10 et 20 %.

4. Pièce moulée en plastique selon l'une quelconque des revendications 1 à 3, **caractérisée en ce que** la structure textile du côté (4) de la couche non-tissée (3) opposé au matériau plastique (2) est choisie dans le groupe consistant en fibres non-tissées surpiquées et fibres non-tissées aiguilletées.

5. Pièce moulée en plastique selon l'une quelconque des revendications 1 à 4, **caractérisée en ce que** ledit matériau plastique est choisi parmi les polymères thermoplastiques du groupe consistant en polyoléfine, polyéthylène, polypropylène, polycarbonate, polyamide, copolymère acryl/butadiène/styrène, copolymère acryl/butadiène/styrène/polycarbonate, polychlorure de vinyle, un mélange polypropylène-polyester ou des mélanges de ceux-ci.

6. Pièce moulée en plastique selon l'une quelconque des revendications 1 à 5, **caractérisée en ce que** la densité linéaire des fibres multicomposées (5) du non-tissé est 0,2 à 10 dtex, de préférence 2 à 4 dtex, de préférence encore 3 dtex environ.

7. Pièce moulée en plastique selon l'une quelconque des revendications 1 à 6, **caractérisée en ce que** lesdites fibres multicomposées du non-tissé sont en un matériau choisi dans le groupe consistant en polyester, polyamide, viscose, résine acrylique, où polyester et polyamide sont plus préférés.

8. Pièce moulée en plastique selon l'une quelconque des revendications 1 à 7, **caractérisée en ce qu'**au moins une partie de la couche (7) ayant un point de fusion inférieur a été fondue et reliée au matériau plastique (2) au moins pour une partie des fibres multicomposées (5).

9. Pièce moulée en plastique selon l'une quelconque des revendications 1 à 8, **caractérisée en ce qu'**une couche (6) desdites fibres multicomposées (5) représente une âme intérieure (6), entourée par au moins une couche (7) ayant un point de fusion inférieur.

10. Pièce moulée en plastique selon l'une quelconque des revendications 1 à 9, **caractérisée en ce que** le point de fusion des autres couches (8) couvrant la couche (7) des fibres multicomposées (5) est inférieur d'au moins 15 °C.

11. Pièce moulée en plastique selon l'une quelconque des revendications 1 à 10, **caractérisée en ce que** les points de fusion des couches (6, 7) des fibres multicomposées (5) présentent une différence ΔT d'au moins 15 °C.

12. Pièce moulée en plastique selon la revendication 11, **caractérisée en ce que** le point de fusion de la couche couvrante (7) est inférieur d'au moins 15 °C au point de fusion de l'âme (6).

13. Pièce moulée en plastique selon l'une quelconque des revendications 1 à 12, **caractérisée en ce que** ladite couche avec un point de fusion supérieur est en un matériau choisi dans le groupe consistant en polyester, polyamide, viscose, verre, résine acrylique, fibre de carbone, fibre naturelle.

14. Pièce moulée en plastique selon l'une quelconque des revendications 1 à 13, **caractérisée en ce que** ladite couche avec un point de fusion inférieur est en un matériau choisi dans le groupe consistant en polyester, polyamide, viscose, résine acrylique.

15. Pièce moulée en plastique selon l'une quelconque des revendications 1 à 14, **caractérisée en ce que** ladite couche avec un point de fusion supérieur est en polyester.

16. Pièce moulée en plastique selon l'une quelconque des revendications 1 à 15, **caractérisée en ce que** ladite couche avec un point de fusion inférieur est en polypropylène.

17. Pièce moulée en plastique selon l'une quelconque des revendications 1 à 16, **caractérisée en ce qu'**une couche possède un point de fusion compris entre 80 et 140 °C, et l'autre couche possède un point de fusion compris entre 95 et 260 °C.

18. Procédé pour la production d'une pièce moulée en plastique (1), comprenant les étapes consistant à :
- placer un non-tissé (3) dans un moule, ledit non-tissé (3) contenant au moins une certaine proportion de fibres multicomposées (5) consistant en au moins deux couches (6, 7) ayant des points de fusion différents, dans laquelle au moins un côté (4) du non-tissé (3) a une structure textile ;
- mettre ladite couche non-tissée (3) en contact avec un matériau plastique (2) à l'état fondu et mouler ladite pièce moulée en plastique, dans lequel le côté structurée (4) du non-tissé (3) est opposé au matériau plastique et représente la décoration finale de la pièce moulée en plastique ;
**caractérisé en ce que** ladite couche non-tissée (3) est partiellement pénétrée par le matériau plastique (2) dans la direction de l'épaisseur de la couche lorsque la couche non-tissée est mise en contact avec le matériau plastique à l'état fondu et la pièce moulée en plastique est moulée ; et **en ce que**
la température du matériau plastique à l'état fondu et/ou la température du moule est choisie de sorte qu'une fusion des couches à bas point de fusion des fibres multicomposées (5) du non-tissé (3) ait lieu pendant le moulage de la pièce moulée en plastique (1), au moins à la surface du côté à structure textile (4) de ladite couche non-tissée (3).

19. Procédé selon la revendication 18, **caractérisé en ce que** ledit moulage de la pièce moulée en plastique (1) est effectué par moulage par injection, surmoulage par estampage, surmoulage par compression ou surmoulage par estampage-injection.

20. Procédé selon la revendication 18 ou 19, **caractérisé en ce que** la température du matériau plastique (2) est comprise entre 230 et 260 °C, de préférence entre 240 et 250 °C.

21. Procédé selon l'une quelconque des revendications 18 à 20, **caractérisé en ce que** la température du côté intérieur du moule, auquel le côté décoratif de la pièce moulée en plastique (1) à produire est adjacent, est comprise entre 20 et 70 °C, de préférence entre 40 et 60 °C.

22. Procédé selon l'une quelconque des revendications 18 à 21, **caractérisé en ce qu'**un matériau choisi dans le groupe consistant en polyoléfine, polyéthylène, polypropylène, polycarbonate, polyamide, copolymère acryl/butadiène/styrène, copolymère acryl/butadiène/styrène/polycarbonate, polychlorure de vinyle, un mélange polypropylène-polyester ou des mélanges de ceux-ci, de préférence polypropylène, est choisi comme matériau plastique (2).

23. Procédé selon l'une quelconque des revendications 18 à 22, **caractérisé en ce qu'**une pièce moulée en plastique ayant les caractéristiques des revendications 1 à 17 est préparée.

24. Utilisation de la pièce moulée en plastique selon les revendications 1 à 17 ou utilisation de la pièce moulée préparée par le procédé selon les revendications 18 à 23 comme partie de garniture intérieure pour véhicules à moteur.
